# EUROPEAN PATENT APPLICATION

(11) **EP 4 644 300 A1**
(43) Date of publication of application: **05.11.2025**
(21) Application number: 23911872.2
(22) Date of filing: 20.12.2023
(51) Int. Cl.: B65G 47/52, B65G 1/00, B65G 47/28, B65G 47/34

(54) **CONVEYOR DEVICE AND AUTOMATIC GUIDED VEHICLE SYSTEM**

(30) Priority: 28.12.2022 JP 2022212696
(71) Applicant: KYOCERA Document Solutions Inc., Osaka-shi, Osaka 540-8585 (JP)
(72) Inventor: NISHIYAMA, Shigeru, Osaka-shi, Osaka 540-8585 (JP); NAKANO, Hidefumi, Osaka-shi, Osaka 540-8585 (JP); MORIUCHI, Isamu, Osaka-shi, Osaka 540-8585 (JP); HORIMOTO, Shin, Osaka-shi, Osaka 540-8585 (JP); OJI, Tomoki, Osaka-shi, Osaka 540-8585 (JP)
(74) Representative: BRP Renaud & Partner mbB Rechtsanwälte Patentanwälte Steuerberater
(86) International application number: PCT/JP2023/045618
(87) International publication number: WO 2024/143092

(57) **Abstract**

A conveyor device (11) includes a first conveyor (11A) having a plurality of rollers (16) installed side by side in a transportation direction of a case (CS), and transporting the case (CS) on each of the rollers (16) by rotating each of the rollers (16); and a guide frame (17) extending in a horizontal direction along one end of each of the rollers (16), formed higher than a height of a circumferential surface of each of the rollers (16). When viewed in a vertical direction, an angle α formed by an axis (16A) of each of the rollers (16) with respect to the guide frame (17) is an acute angle on a downstream side in the transportation direction of the case (CS), and each of the rollers (16) is disposed obliquely.

## Description

### TECHNICAL FIELD

The present invention relates to a conveyor device transporting an article and an automatic guided vehicle system using the conveyor device, and particularly relates to a technology of making a transportation trajectory of an article by a conveyor device stable.

### BACKGROUND ART

Generally, regarding conveyors transporting articles, roller conveyors including a plurality of rollers installed side by side in a transportation direction of an article, and transporting an article on each roller by rotating each roller are known. For example, in the generalized system for warehouse control described in Patent Document 1, a roller conveyor transports an article, a robot arm picks up the article on the roller conveyor, and shipment is performed.

In addition, various systems for moving articles using an automatic guided vehicle (AGV) have been proposed. For example, in the automatic guided system described in Patent Document 2, an item is transported by a conveyor, and if the item arrives at the end of the conveyor, a nearby automatic guided vehicle is called up. A robot loads the item on the automatic guided vehicle, the item is moved to a shelf by the automatic guided vehicle, and the item is stored in the shelf.

### Citation List

### Patent Document

Patent Document 1: Japanese Patent No. 6887041
Patent Document 2: Japanese Unexamined Patent Application Publication No. 2020-123196

### SUMMARY OF INVENTION

Incidentally, as in the technology disclosed in Patent Document 2, when an item is transported using a conveyor and the item is loaded onto an automatic guided vehicle by a robot after the item arrives at the end of the conveyor, it takes a long time from when the conveyor starts transporting the item to when the item is loaded onto the automatic guided vehicle so that the item is not moved efficiently.

In addition, it is anticipated to apply an arm robot described in Patent Document 1 and the like as a robot to load items onto an automatic guided vehicle. However, when such a robot is applied, a system constitution will become complicated and system costs will increase.

The inventor of the present invention has newly devised a system in which an article is efficiently transported by transferring the article from a conveyor to an automatic guided vehicle while the automatic guided vehicle is caused to travel along the conveyor. In this system, in order to transfer an article from the conveyor to the automatic guided vehicle, there is a need to provide a constant and stable transportation direction of an article transported by the conveyor.

The present invention has been made in consideration of the foregoing circumstances, and an object thereof is to provide a constant and stable transportation direction of an article by a conveyor including a plurality of rollers installed side by side in the transportation direction of the article.

A conveyor device according to an aspect of the present invention includes a conveyor having a plurality of rollers installed side by side in a transportation direction of an article, and transporting the article on each of the rollers by rotating each of the rollers; a guide frame extending in a horizontal direction along one end of each of the rollers, formed at a height higher than a circumferential surface of each of the rollers, and pivotally supporting one end of each of the rollers; and a support frame extending in the horizontal direction along the other end of each of the rollers, formed at a height lower than the circumferential surface of each of the rollers, and pivotally supporting the other end of each of the rollers. In a top view in a vertical direction, an angle formed by an axis of each of the rollers with respect to the guide frame, that is, an angle on a downstream side in the transportation direction of the article is an acute angle set as a predetermined angle, and each of the rollers is disposed obliquely with respect to the guide frame.

An automatic guided vehicle system according to another aspect of the present invention includes the foregoing conveyor device, and an automatic guided vehicle traveling along a side end which is the support frame side of the conveyor. The automatic guided vehicle includes an image capturing device capturing an image of a mark printed on a surface of the article facing the automatic guided vehicle when the article is being transported by the conveyor.

### [Advantageous Effects of Invention]

According to the present invention, it is possible to provide a constant and stable transportation direction of an article by a conveyor including a plurality of rollers installed side by side in the transportation direction of the article.

### BRIEF DESCRIPTION OF DRAWINGS

[FIG. 1] A plan view schematically showing an automatic guided vehicle system to which a conveyor device according to an embodiment of the present invention is applied.
[FIG. 2A] A plan view showing a first conveyor viewed in a vertical direction.
[FIG. 2B] A side view showing the first conveyor viewed in a longitudinal direction of the first conveyor.
[FIG. 3A] A side view showing a case transported by the first conveyor.
[FIG. 3B] A plan view schematically showing the first conveyor, the case, and an automatic guided vehicle.
[FIG. 4] A perspective view schematically showing the automatic guided vehicle.
[FIG. 5] A perspective view showing a sliding state of each arm of the automatic guided vehicle.
[FIG. 6] A view schematically showing a rack gear and a pinion gear for causing the arm to reciprocate.
[FIG. 7A] A perspective view showing a mechanism for causing a first claw and a second claw of each arm to protrude or retreat.
[FIG. 7B] A plan view showing the mechanism for causing the first claw and the second claw of each arm to protrude or retreat.
[FIG. 8] A block diagram showing a control system of the automatic guided vehicle.
[FIG. 9] A flowchart showing a control procedure for article movement processing.
[FIG. 10A] A perspective view showing a state in which the case is being transported by the first conveyor.
[FIG. 10B] A perspective view showing a state in which the automatic guided vehicle has caught up with the case being transported by the first conveyor.
[FIG. 11] A perspective view showing a state in which one arm of the automatic guided vehicle comes into contact with the case being transported by the first conveyor.
[FIG. 12A] A perspective view showing a state in which the case being transported by the first conveyor is sandwiched between the arms of the automatic guided vehicle.
[FIG. 12B] A perspective view showing a process in which the case being transported by the first conveyor is being transferred to the automatic guided vehicle.
[FIG. 13] A perspective view showing a state in which the first claw of each arm on a distal end inward side is caused to protrude with the case being transported by the first conveyor sandwiched between the arms.
[FIG. 14] A perspective view showing the automatic guided vehicle loaded with the case transferred from the first conveyor.
[FIG. 15] A perspective view showing a state in which the automatic guided vehicle has stopped in front of a storage shelf.
[FIG. 16] A perspective view showing a state in which the second claw of each arm on a rear end inward side is caused to protrude with the case sandwiched between the arms of the automatic guided vehicle.
[FIG. 17] A perspective view showing a process in which the case is being transferred from the automatic guided vehicle to the storage shelf.
[FIG. 18] A perspective view showing the automatic guided vehicle which has transferred the case to the storage shelf.
[FIG. 19] A perspective view showing a state in which the case has been transferred from the automatic guided vehicle to the storage shelf.

### DESCRIPTION OF EMBODIMENT

Hereinafter, an embodiment of the present invention will be described with reference to the drawings.

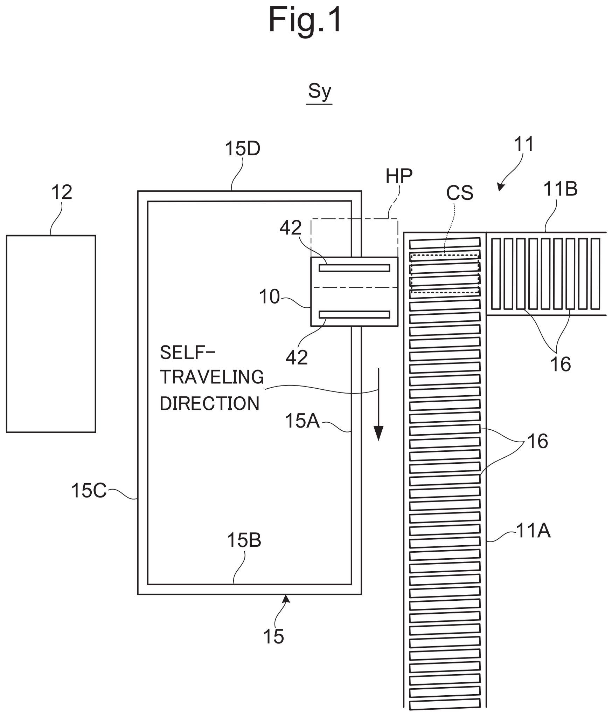

FIG. 1 is a schematic view showing an automatic guided vehicle system Sy to which a conveyor device 11 according to the embodiment of the present invention is applied. The automatic guided vehicle system Sy includes an automatic guided vehicle 10, and the conveyor device 11 for transporting an article loaded thereon. The automatic guided vehicle system Sy is provided indoors, such as a warehouse equipped with storage shelves 12.

The automatic guided vehicle 10 travels by itself along a traveling line 15 which has been laid on a floor surface. For example, the traveling line 15 is a magnetic tape taped on the floor surface. The automatic guided vehicle 10 includes a magnetic sensor for detecting the magnetic tape. In the automatic guided vehicle 10, a controller 74 (which will be described below) detects the position of the magnetic tape (traveling line 15) on the basis of information obtained from the magnetic sensor and performs steering control in accordance with the position of the traveling line 15 to cause the automatic guided vehicle 10 to travel along the traveling line 15.

Alternatively, the traveling line 15 is a colored tape which has been taped on the floor surface and has a color or a reflectance different from that of the floor surface. The automatic guided vehicle 10 includes an optical sensor such as a CCD for detecting the colored tape. In the automatic guided vehicle 10, the controller 74 (which will be described below) detects the position of the colored tape (traveling line 15) on the basis of information obtained from the optical sensor and performs steering control in accordance with the position of the traveling line 15 to cause the automatic guided vehicle 10 to travel along the traveling line 15.

Both the method using a magnetic tape and a magnetic sensor and the method using a colored tape and an optical sensor described above are known technologies.

The conveyor device 11 includes a first conveyor 11A, and a second conveyor 11B connected to one end of the first conveyor 11A. Both the first conveyor 11A and the second conveyor 11B include a plurality of rollers 16 installed side by side in a transportation direction of a case CS (example of an article).

Each roller 16 is supported by a frame of the first conveyor 11A or the second conveyor 11B so as to pivot on a corresponding shaft orthogonal to the transportation direction of the case CS. Each roller 16 is rotatably driven in one direction and transports the case CS on each roller 16. The second conveyor 11B transports the case CS to one end of the first conveyor 11A, and the first conveyor 11A successively transports the case CS.

The traveling line 15 includes a first traveling line 15A, a second traveling line 15B, a third traveling line 15C, and a fourth traveling line 15D, which are connected such that a rectangular shape is formed. All the traveling lines 15A to 15D have a linear shape. The first traveling line 15A extends in parallel with a direction in which the first conveyor 11A extends (direction in which the case CS is transported). The fourth traveling line 15C passes near the storage shelf 12.

The automatic guided vehicle 10 starts traveling from a standby position HP provided near a starting end of the first traveling line 15A and travels along the first traveling line 15A in parallel with the first conveyor 11A. The automatic guided vehicle 10 shifts to traveling along the second traveling line 15B by turning the proceeding direction by 90 degrees at a terminal end of the first traveling line 15A. The automatic guided vehicle 10 shifts to traveling along the third traveling line 15C by turning the proceeding direction by 90 degrees at a terminal end of the second traveling line 15B. The automatic guided vehicle 10 travels along the third traveling line 15C to reach the storage shelf 12 and then shifts to traveling along the fourth traveling line 15D by turning the proceeding direction by 90 degrees at a terminal end of the third traveling line 15C. The automatic guided vehicle 10 shifts to traveling along the first traveling line 15A by turning the proceeding direction by 90 degrees at a terminal end of the fourth traveling line 15D and returns to the standby position HP near the starting end of the first traveling line 15A.

While the automatic guided vehicle 10 travels along the first traveling line 15A in parallel with the first conveyor 11A, as will be described below in detail, the case CS is moved by transferring the case CS being transported by the first conveyor 11A to the automatic guided vehicle 10.

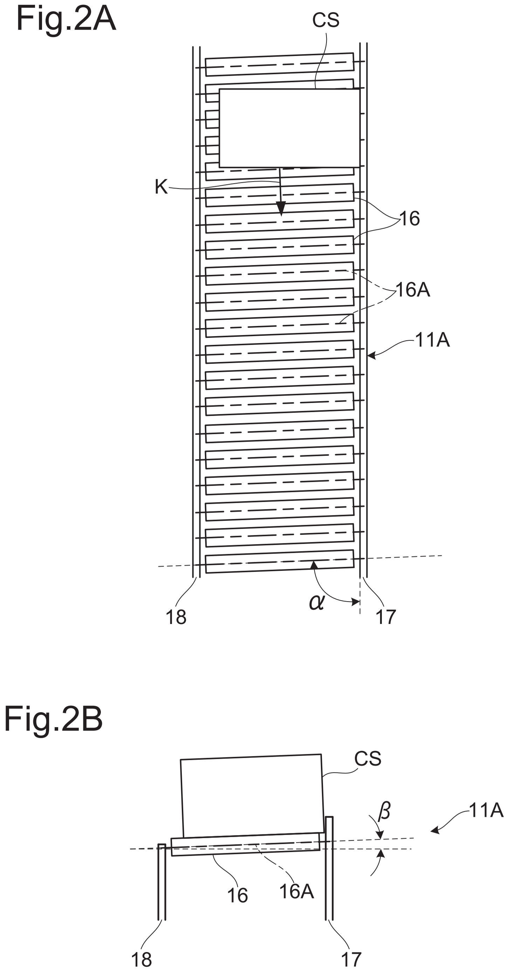

FIG. 2A is a plan view showing the first conveyor 11A viewed in a vertical direction. FIG. 2B is a side view showing the first conveyor 11A viewed in a longitudinal direction (horizontal direction) of the first conveyor 11A.

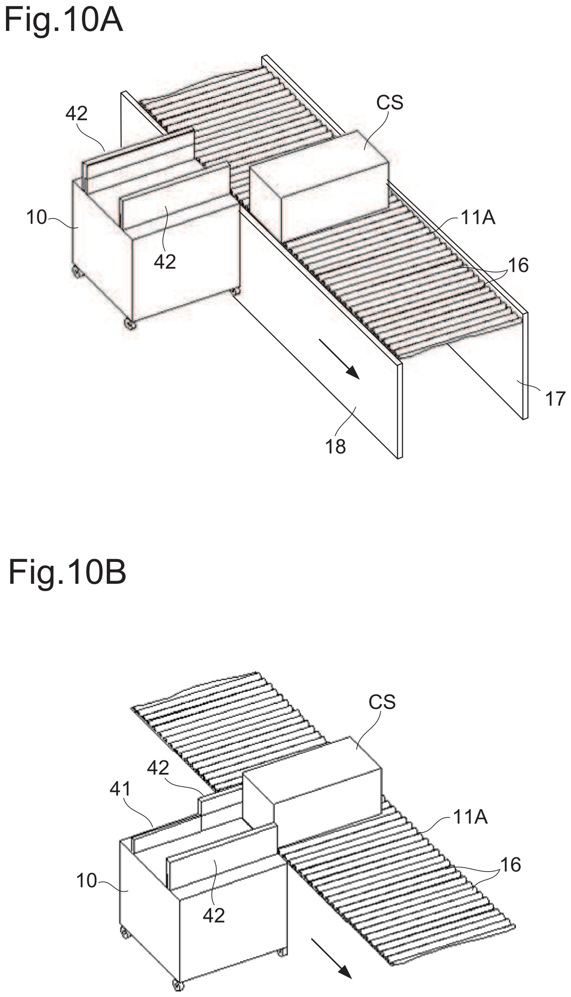

As shown in FIGS. 2A and 2B, and FIGS. 10A and 10B (which will be described below), the first conveyor 11A includes a guide frame 17 and a support frame 18 extending in the vertical direction with respect to the ground and forming a frame of the first conveyor 11A. The guide frame 17 and the support frame 18 pivotally support a plurality of rollers 16. The guide frame 17 and the support frame 18 are provided in a manner of extending in the horizontal direction. The guide frame 17 and the support frame 18 are disposed parallel to each other with a certain gap therebetween. The plurality of rollers 16 are installed side by side between guide frame 17 and the support frame 18.

One end of a shaft 16A of each roller 16 is pivotally supported by the guide frame 17, and the other end is pivotally supported by the support frame 18. If the shaft 16A of each roller 16 is rotatably driven by a drive force supplied from a drive source such as a motor, each roller 16 rotates in one direction. Due to this rotation, the case CS on each roller 16 is transported in one direction.

As shown in FIG. 2A, when the first conveyor 11A is viewed from above (upper side in the vertical direction), an angle of the shaft 16A of the roller 16 with respect to the guide frame 17 extending in the horizontal direction, that is, an angle α on a downstream side in the transportation direction of the case CS has a predetermined value. The angle α is an acute angle smaller than a right angle and is 85 degrees to 88 degrees, for example. Each roller 16 is disposed obliquely with respect to the guide frame 17.

As shown in FIG. 2B, when the first conveyor 11A is viewed from the side in the horizontal direction, in a state in which one end of the shaft 16A of each roller 16 is higher on the guide frame 17 side and the other end of the shaft 16A of each roller 16 is lower on the support frame 18 side, each roller 16 is pivotally supported by the guide frame 17 and the support frame 18. Each roller 16 is inclined at a predetermined angle β with respect to the horizontal direction. For example, the angle β is 1 degree to 10 degrees. In this manner, it is preferable that the angle β be 1 degree to 10 degrees. It is also possible to set the angle β to zero degrees so that each roller 16 is pivotally supported by the guide frame 17 and the support frame 18 in a horizontal posture with respect to the ground.

The guide frame 17 is formed at a height protruding higher than a circumferential surface of each roller 16. The support frame 18 is formed at a height lower than the circumferential surface of each roller 16. That is, the support frame 18 side is provided with no member protruding higher than the circumferential surface of each roller 16.

As described above, the shaft 16A of each roller 16 is obliquely set on the downstream side in the transportation direction of the case CS at the angle α which is an acute angle smaller than a right angle with respect to the guide frame 17. As a result, a feeding direction K of the case CS fed by each roller 16 slightly deviates from a direction parallel to the guide frame 17 and becomes a direction toward the guide frame 17.

Therefore, the case CS is transported in a direction which is inclined to the guide frame 17 side from a direction parallel to the guide frame 17 and in which the case CS approaches the guide frame 17 on each roller 16. Accordingly, the case CS is transported while it comes into sliding contact with the guide frame 17 protruding higher than the circumferential surface of each roller 16.

As a result, when a plurality of cases CS are consecutively transported to one end of the first conveyor 11A from the second conveyor 11B, even if the position of each case CS on the first conveyor 11A varies in a width direction of the first conveyor 11A, while the case CS is being transported by the first conveyor 11A, the case CS is transported while it comes into sliding contact with the guide frame 17, and the position of each case CS in the width direction of the first conveyor 11A is constantly maintained. That is, a transportation trajectory of the case CS by the first conveyor 11A is constant and stable.

In addition, one end of the shaft 16A of each roller 16 is higher on the guide frame 17 side, and the other end of the shaft 16A is lower on the support frame 18 side. Each roller 16 is inclined at the angle β with respect to the horizontal direction, and the support frame 18 is lower than the circumferential surface of each roller 16. As a result, the case CS can be quickly moved on each roller 16 toward the other end of each roller 16 which is lower. Moreover, the case CS can be easily drawn out to the outward side of the support frame 18 from a place on each roller 16.

If the angle α formed by the shaft 16A of each roller 16 with respect to the guide frame 17 is excessively small, a biasing force of the case CS attempting to approach the guide frame 17 increases. As a result, the case CS receives a resistance from the guide frame 17, and it becomes difficult to be transported smoothly along the guide frame 17. Therefore, there is a need to set the angle α appropriately. There is a need to consider the transportation speed of the case CS by each roller 16, a frictional force between the guide frame 17 and the case CS, and the like for an appropriate angle α, which is therefore obtained experimentally. From this viewpoint, for example, the angle α is set to 85 degrees to 88 degrees.

In addition, if the angle β formed by each roller 16 with respect to the horizontal direction is excessively large, the case CS will slip down against a biasing force of the case CS attempting to approach the guide frame 17. Therefore, there is a need to set the angle β appropriately in accordance with the angle α. From this viewpoint, for example, the angle β is set to 1 degree to 10 degrees.

As described above, in the first conveyor 11A, the case CS is transported while it comes into sliding contact with the guide frame 17. As a result, the position of the case CS can be constantly maintained in the width direction of the first conveyor 11A, and the transportation trajectory of the case CS can be made stable. In addition, each roller 16 is inclined downward to the support frame 18 side, and the support frame 18 is lower than the circumferential surface of each roller 16. As a result, the case CS can be easily drawn out to the outward side of the support frame 18 from a place on each roller 16.

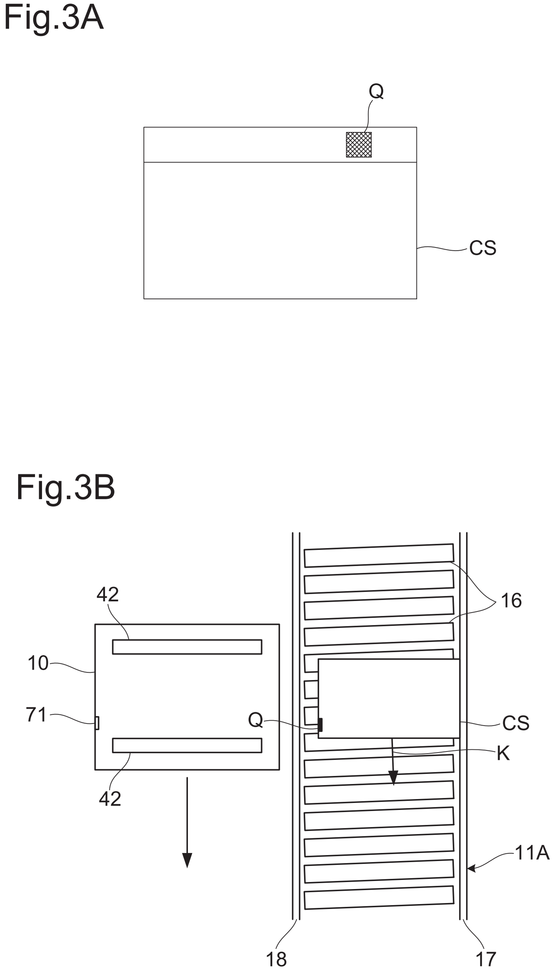

Next, the case CS will be described. As shown in FIG. 3A, a 2D code Q is printed on a side surface of the case CS. As shown in FIG. 3B, the automatic guided vehicle 10 is provided with an image capturing camera 71 including a CCD or the like. The image capturing camera 71 captures an image of the 2D code Q on the side surface of the case CS being transported by the first conveyor 11A.

When the case CS is transported by the first conveyor 11A, the position of the case CS is constantly maintained in the width direction of the first conveyor 11A. As a result, a separation distance between the image capturing camera 71 and the 2D code Q on the side surface of the case CS does not fluctuate so that the image capturing camera 71 can accurately capture an image of the 2D code Q on the side surface of the case CS.

In addition, the case CS is easily drawn out to the outward side of the support frame 18 from a place on each roller 16. As a result, the case CS can also be easily transferred from the first conveyor 11A to the automatic guided vehicle 10.

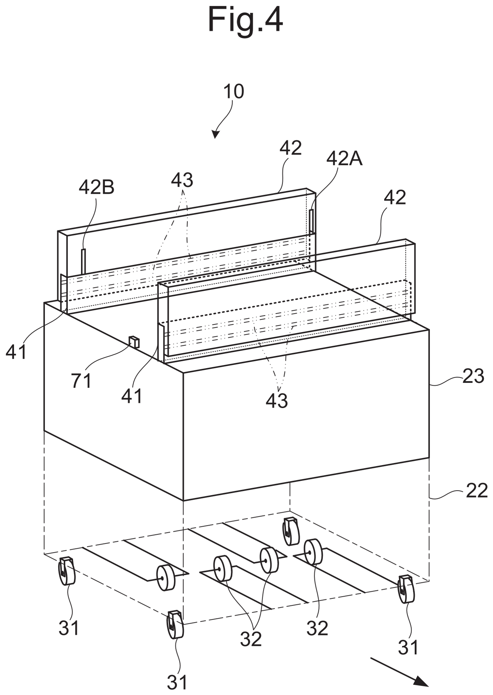

FIG. 4 is an enlarged perspective view schematically showing the automatic guided vehicle 10. As shown in FIG. 4, the automatic guided vehicle 10 includes a traveling section 22 provided on the lower side of a vehicle main body, and a working section 23 provided on the upper side of the vehicle main body.

Corresponding casters 31 are provided at four corners of the bottom of the traveling section 22. A plurality of driving wheels 32 are provided apart from each other on the inward side of the bottom of the traveling section 22. Each driving wheel 32 is rotatably driven by a corresponding traveling drive motor 33, and if the automatic guided vehicle 10 travels, the wheel of each caster 31 performs subordinate rotation. The traveling drive motor 33 rotatably driving the driving wheel 32 is controlled separately for each driving wheel 32 so that the rotation speed of the corresponding driving wheel 32 is adjusted. Due to this adjustment, the proceeding direction of the automatic guided vehicle 10 is changed.

The working section 23 includes a pair of support walls 41 disposed and installed in a projecting manner so as to face each other on the upper surface of the working section 23. Each support wall 41 supports an arm 42 with an upper part and an outer side wall of the support wall 41. For example, each arm 42 has a hollow casing shape. Each arm 42 is supported by each support wall 41 in a manner of being slidable along each support wall 41 through slide rails 43. The separation distance between the arms 42 is set to a predetermined distance which is slightly longer than the width of the case CS transported by the conveyor device 11. Each arm 42 can insert the case CS between the arms 42 in a sandwiching manner.

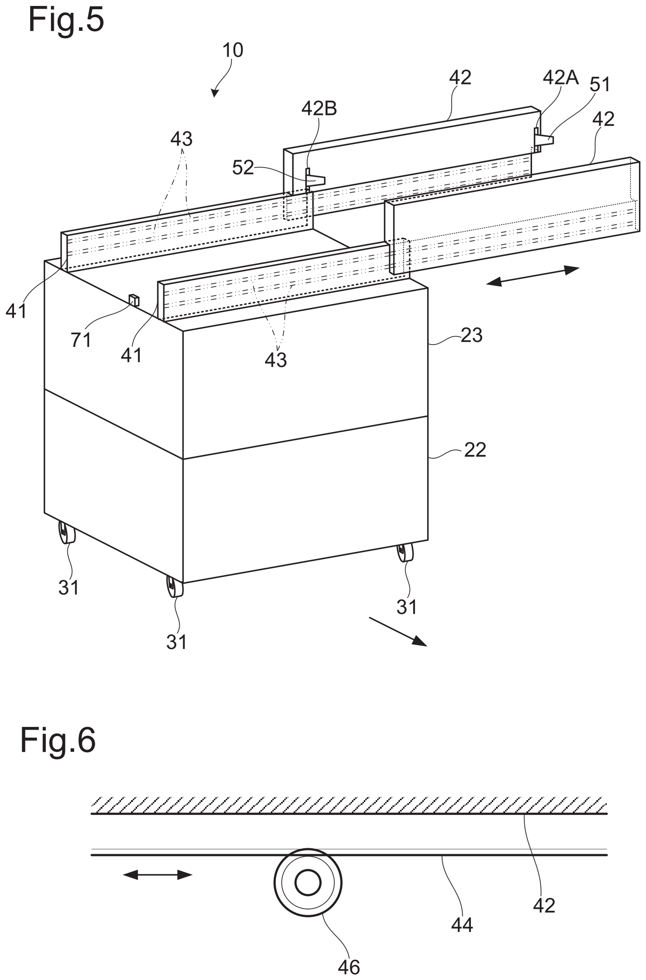

FIG. 5 is a perspective view showing a sliding state of each arm 42. Both the arms 42 are each supported by the two slide rails 43 extending in a horizontal direction in a manner of being slidable with respect to the corresponding support walls 41. The movement direction of each arm 42 is guided by the slide rails 43, and each arm 42 can reciprocate in its longitudinal direction. For example, each slide rail 43 has a constitution referred to as three-stage sliding. Each slide rail 43 has a constitution in which a portion thereof protrudes toward the outside (lateral side of the working section 23) and moves.

The slide rails 43 have a first rail which is provided in a side wall of the support wall 41, and a second rail which is interlocked and supported by the first rail and of which the movement direction is guided by the first rail so as to move to the outside (lateral side of the working section 23). The second rail is attached to the arm 42. Accordingly, each arm 42 is constituted such that each arm 42 reciprocates in the horizontal direction and each arm 42 in its entirety can perform an operation of protruding outward from the automatic guided vehicle 10 and an operation of retracting into the automatic guided vehicle 10 from the protruding position.

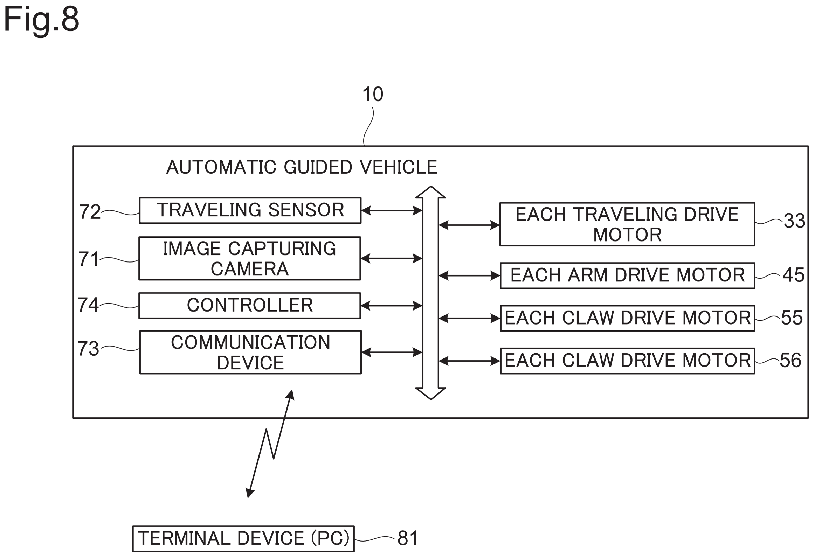

As shown in FIG. 6, a rack gear 44 is provided at a lower end of each arm 42. Each support wall 41 is provided with a corresponding arm drive motor 45 (shown in FIG. 8). A corresponding pinion gear 46 is fixed to an output shaft of each arm drive motor 45. If each arm drive motor 45 reciprocally rotates, the corresponding pinion gear 46 reciprocally rotates, and each rack gear 44 and each arm 42 reciprocate in response to guidance for the movement direction by the slide rails 43.

The foregoing outward movement of the arm 42 is restricted to a position where the state in which the arm 42 is interlocked and supported by the support wall 41 and the slide rails 43 is not cancelled, as shown in FIG. 5, due to engagement of the first rail and the second rail of the slide rails 43 and control of rotation of the arm drive motor 45.

As shown in FIGS. 4 and 5, a slit 42A is formed on a side surface which is the inward side at the distal end of each arm 42 (side facing the other arm 42 on the opposite side). Each slit 42A is provided with a first claw 51 protruding to a space between the arms 42. A slit 42B is formed on a side surface which is the inward side at the rear end (base end) of the arm 42 (side facing the other arm 42 on the opposite side). Each slit 42B is provided with a second claw 52 protruding to the space between the arms 42.

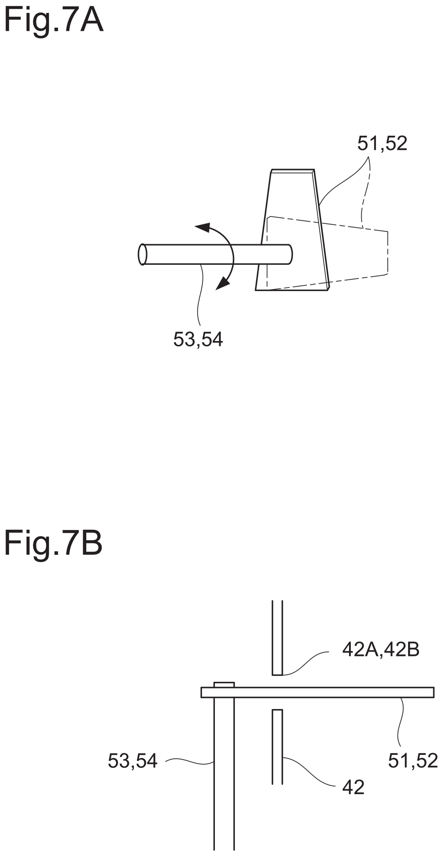

As shown in FIGS. 7A and 7B, each first claw 51 is supported by a rotary shaft 53 on the inward side of the hollow casing-shaped arm 42. Each second claw 52 is supported by a rotary shaft 54 on the inward side of the hollow casing-shaped arm 42. Each first claw 51 performs an operation of being reciprocally rotated by a claw drive motor 55 (shown in FIG. 8) connected to each rotary shaft 53 and protruding to the space between the arms 42 from the slit 42A and an operation of moving from the space and retreating into the arm 42. Each second claw 52 performs an operation of being reciprocally rotated by a claw drive motor 56 (shown in FIG. 8) connected to each rotary shaft 54 and protruding to the space between the arms 42 from the slit 42B and an operation of moving from the space and retreating into the arm 42.

As shown in FIGS. 4 and 5, an image capturing camera 71 is provided on the working section 23. The direction of the image capturing camera 71 is set such that the image capturing camera 71 faces a space above the first conveyor 11A when the automatic guided vehicle 10 travels along the first traveling line 15A in parallel with the first conveyor 11A. In the present embodiment, the image capturing camera 71 is disposed in a central part of a region sandwiched between the two support walls 41 in the proceeding direction of the automatic guided vehicle 10 on the working section 23, that is, the base end side of each arm 42.

The image capturing camera 71 captures an image of the 2D code (for example, QR code (registered trademark)) Q or a mark attached to the case CS transported on the first conveyor 11A. The image capturing camera 71 may be disposed on the base end side of each arm 42, that is, a position of one support wall 41 on the outward side (outward side of a region sandwiched between the two support walls 41) on the working section 23 in the proceeding direction of the automatic guided vehicle 10, or the upper part of the one support wall 41, that is, a position on the side wall side facing the other support wall 41. The image capturing camera 71 may be disposed at a different position, even if the position is not on the base end side of each arm 42, as long as it is a position where an image of the 2D code Q or the mark attached to the case CS transported on the first conveyor 11A can be captured.

FIG. 8 is a block diagram showing a control system of the automatic guided vehicle 10. As shown in FIG. 8, the automatic guided vehicle 10 includes each traveling drive motor 33, each arm drive motor 45, each claw drive motor 55, each claw drive motor 56, the image capturing camera 71, a traveling line sensor 72, a communication device 73, and the controller 74.

Each traveling drive motor 33 rotatably drives each driving wheel 32 of the traveling section 22. Each arm drive motor 45 moves each arm 42 of the working section 23 in the horizontal direction. Each claw drive motor 55 causes each first claw 51 to perform an operation of protruding to the space between the arms 42 from the slit 42A of each arm 42 on the distal end inward side and an operation of retreating into the arm 42.

Each claw drive motor 56 causes each second claw 52 to perform an operation of protruding to the space between the arms 42 from the slit 42B of each arm 42 on the rear end inward side and an operation of retreating into the arm 42. The image capturing camera 71 captures an image of the 2D code Q attached to the case CS on the first conveyor 11A. The traveling line sensor 72 detects the traveling line 15.

The communication device 73 is a communication interface including a communication module such as a LAN chip. The communication device 73 is connected to a terminal device 81 through a wired or wireless LAN, and transmits and receives data with respect to the terminal device 81. For example, the terminal device 81 is a personal computer (PC), which is operated by a user.

The controller 74 includes a processor, a random access memory (RAM), a read only memory (ROM), and a dedicated hardware circuit. For example, the processor is a central processing unit (CPU), an application specific integrated circuit (ASIC), a micro-processing unit (MPU), or the like. The controller 74 generally controls the automatic guided vehicle 10 by operating the foregoing processor in accordance with a control program stored in the foregoing ROM.

The controller 74 controls driving of each arm drive motor 45 to cause each arm 42 to reciprocate. The controller 74 controls driving of each of the claw drive motors 55 and 56 to cause each of the claws 51 and 52 to protrude from the corresponding slits 42A and 42B formed at both ends of each arm 42 or to retreat into the arm 42. The controller 74 also acquires an image captured by the image capturing camera 71, analyzes the image, and identifies the 2D code Q included in the image.

The automatic guided vehicle 10 stops and stands by at the standby position HP under the control of the controller 74, and if transportation of the case CS is started by the first conveyor 11A, the case CS being transported by the first conveyor 11A is transferred to the automatic guided vehicle 10 by driving each arm 42 while the automatic guided vehicle 10 travels along the first traveling line 15A in parallel with the first conveyor 11A. Under the control of the controller 74, the automatic guided vehicle 10 travels along a route in the order of the first traveling line 15A, the second traveling line 15B, and the third traveling line 15C, moves to a place in front of the storage shelf 12, and stops there. Under the control of the controller 74, the automatic guided vehicle 10 transfers the case CS to the storage shelf 12, travels along a route in the order of the third traveling line 15C, the fourth traveling line 15D, and the first traveling line 15A, and returns to the standby position HP.

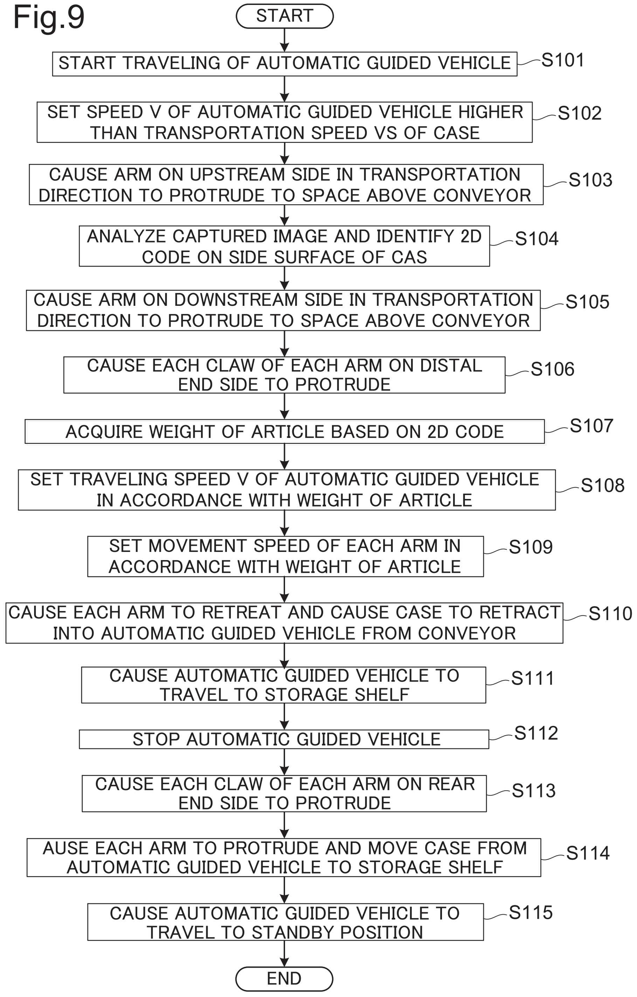

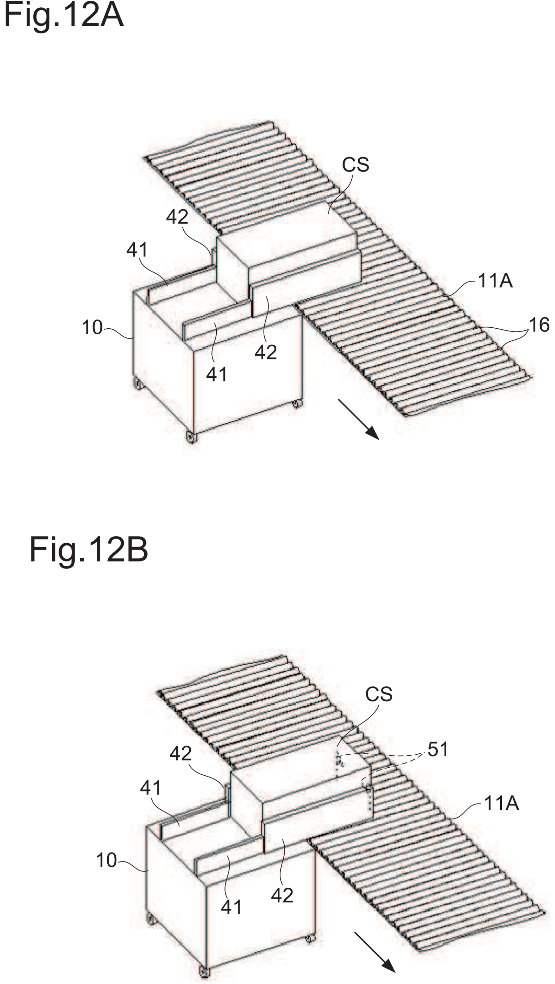

Next, a control procedure of article movement processing for transferring the case CS being transported by the first conveyor 11A to the automatic guided vehicle 10 and moving the case CS by the automatic guided vehicle 10 will be described in detail with reference to the flowchart shown in FIG. 9, and the like. Among FIGS. 10A, 10B, 12A, and 12B, the guide frame 17 and the support frame 18 are illustrated only in FIG. 10A, and illustration of the guide frame 17 and the support frame 18 is omitted in FIGS. 10B, 12A, and 12B.

As shown in FIG. 1, in a state in which the automatic guided vehicle 10 stands by at the standby position HP on the first traveling line 15A, the second conveyor 11B starts transporting the case CS. The standby position HP is set at the terminal end of the second conveyor 11B, that is, a side part at the position (starting end of the first conveyor 11A) connected to the first conveyor 11A. The case CS on the second conveyor 11B is transported in a posture in which the attached 2D code Q faces the standby position HP. The case CS which has been transported to the position indicated by the dashed line in FIG. 1 is successively transported by the first conveyor 11A with the transportation direction being switched to the direction of the arrow shown in FIG. 1.

At the point of time when the case CS is transported to the position indicated by the dashed line in FIG. 1, the automatic guided vehicle 10 at the standby position HP captures an image of the 2D code Q of the case CS with the image capturing camera 71. The image capturing camera 71 of the automatic guided vehicle 10 at the standby position HP is provided at a position facing the 2D code Q on the side surface of the case CS. The 2D code Q includes identification information indicating a unique ID of the case CS. In the automatic guided vehicle 10, the controller 74 analyzes the image of the 2D code Q captured by the image capturing camera 71 and judges whether or not the ID indicated by the identification information included in the 2D code Q is the same as the ID indicated by the identification information received in advance from the terminal device 81 via the communication device 73.

When the controller 74 judges that it is the same as described above, traveling of the automatic guided vehicle 10 in the direction of the arrow shown in FIG. 1 is started (Step S101). At this point of time, the first conveyor 11A starts transporting the case CS without changing the posture of the case CS. Therefore, the case CS has already passed the position indicated by the dashed line in FIG. 1, that is, the standby position HP.

The controller 74 detects the position of the traveling line 15 on the basis of a detection output of the traveling line sensor 72 and controls driving of the traveling drive motor 33 of each driving wheel 32 in accordance with the detected position of the traveling line 15 to cause the automatic guided vehicle 10 to travel at a position close to the first conveyor 11A in parallel with the first conveyor 11A along the first traveling line 15A in a posture with the direction in which each arm 42 extends (longitudinal direction of the arm 42) being orthogonal to the traveling line 15, as shown in FIG. 10A.

At this time, the controller 74 sets a traveling speed V of the automatic guided vehicle 10 to a predetermined traveling speed VA higher than a transportation speed VS of the case CS by the first conveyor 11A (Step S102). The controller 74 controls driving of one of the two arm drive motors 45 to cause the one arm 42 on the upstream side in the transportation direction of the case CS to protrude to the space above the first conveyor 11A, as shown in FIG. 10B (Step S103).

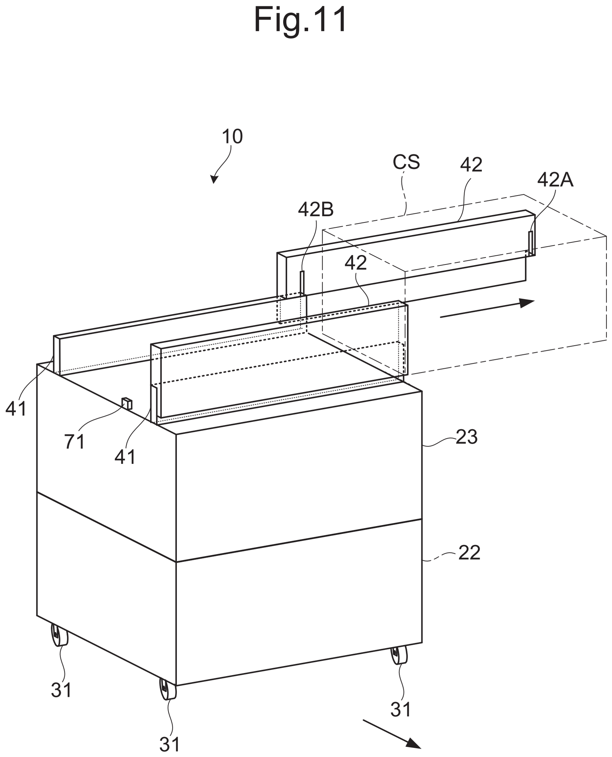

At this time, the controller 74 has set the traveling speed V of the automatic guided vehicle 10 to the foregoing traveling speed VA higher than the transportation speed VS of the case CS by the first conveyor 11A. As a result, as shown in FIGS. 10B and 11, the one arm 42 on the upstream side in the transportation direction of the case CS, that is, the arm 42 protruding to the space above the first conveyor 11A catches up and comes into contact with the case CS.

In addition, the case CS comes into sliding contact with the guide frame 17 while being transported by the first conveyor 11A. As a result, the position of the case CS in the width direction of the first conveyor 11A is constantly maintained so that the transportation trajectory of the case CS is made stable.

The side surface of the case CS facing the automatic guided vehicle 10 side is provided with a predetermined mark (for example, a hole formed on the side surface, a predetermined printed image, or the like, and it may be the 2D code Q). The image capturing camera 71 is provided at a position where an image of the side surface of the case CS can be captured when the foregoing one arm 42 catches up and comes into contact with the case CS.

The image capturing camera 71 captures an image of the foregoing mark when the foregoing one arm 42 catches up and comes into contact with the case CS. In addition, as described above, since the position of the case CS in the width direction of the first conveyor 11A is constantly maintained, the transportation trajectory of the case CS is made stable. As a result, the separation distance between the image capturing camera 71 and the 2D code Q on the side surface of the case CS does not fluctuate so that an image of the 2D code Q is accurately captured by the image capturing camera 71.

The controller 74 acquires an image captured by the image capturing camera 71, analyzes the image, and identifies an image indicating the foregoing mark in the image (Step S104). On the assumption that the foregoing one arm 42 has caught up and come into contact with the case CS, the controller 74 controls driving of the arm drive motor 45 for driving the other arm 42 to cause the other arm 42 on the downstream side in the transportation direction of the case CS to protrude to the space above the first conveyor 11A, as shown in FIG. 12A (Step S105).

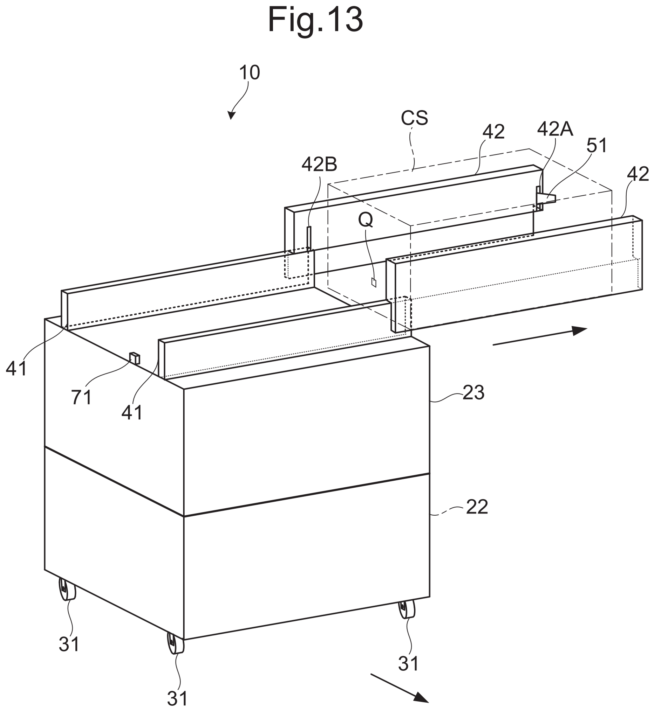

The separation distance between the arms 42 is set to a distance corresponding to the width of the case CS, being slightly longer than the width of the case CS. Therefore, the case CS enters and is sandwiched between the arms 42 due to the protrusion of the other arm 42. In addition, each arm 42 has a length allowing the distal end of each arm 42 to reach a position beyond the rear end of the case CS in a direction orthogonal to the transportation direction of the case CS due to the protrusion by the control of the controller 74. The controller 74 causes each arm 42 to protrude until the distal end of each arm 42 reaches a position beyond the rear end of the case CS (FIGS. 12A and 13).

Subsequently, the controller 74 controls driving of each claw drive motor 55 to cause the first claw 51 of each arm 42 on the distal end inward side to protrude, as shown in FIGS. 12B and 13 (Step S106).

The 2D code Q identified in Step S104 includes weight information indicating the weight of contents contained in the case CS. The weight information may indicate the weight itself or may indicate, for example, the weight of a single unit of contents and the number of contents. The controller 74 distinguishes the weight of the contents on the basis of the weight information and calculates the weight of the article by adding the known weight of the case CS to the weight of the contents (Step S107). The weight information may indicate the added weight of the article itself including the weight of the contents and the known weight of the case CS. In this case, the controller 74 acquires the weight of the article directly from the weight information.

At the point of time of the processing of Step S170, the controller 74 controls driving of the traveling drive motor 33 of each driving wheel 32 to cause the automatic guided vehicle 10 to travel at the traveling speed VA which has been set in Step S102. The controller 74 compares the weight of the article calculated Step S107 with a preset threshold. When it is judged that the weight of the article is smaller than the predetermined threshold, the controller 74 maintains the traveling speed V of the automatic guided vehicle 10 at the traveling speed VA.

Meanwhile, if the weight of the article is equal to or greater than the foregoing threshold, the controller 74 reduces the traveling speed V of the automatic guided vehicle 10 to a predetermined traveling speed VD which is equal to or higher than the transportation speed VS of the case CS by the first conveyor 11A and lower than the traveling speed VA which has been set in Step S102 (Step S108). Accordingly, when the weight of the article contained in the case CS is equal to or greater than the threshold, which is heavy, the traveling speed V of the automatic guided vehicle 10 is reduced while being retained equal to or higher than the transportation speed VS of the case CS.

For this reason, when the automatic guided vehicle 10 is in a traveling state while the case CS is pushed by the foregoing one arm 42 which has been caused to protrude, a burden on each traveling drive motor 33 can be reduced. Moreover, a load from the case CS applied to the foregoing one arm 42 can also be reduced, and therefore the automatic guided vehicle 10 can be caused to stably travel.

The controller 74 sets the rotation speed of each arm drive motor 45 in accordance with the weight of the article calculated in Step S107 (Step S109). For example, the controller 74 sets the rotation speed of each arm drive motor 45 to be lower as the weight of the article increases. For example, the ROM built into the controller 74 stores a data table indicating the weight of the article and the rotation speed of each arm drive motor 45 corresponding to the weight of the article for each weight of the article in advance. The controller 74 reads the rotation speed of each arm drive motor 45 corresponding to the weight of the article calculated in Step S107 from the data table and sets the read rotation speed as the rotation speed of each arm drive motor 45 corresponding to the weight of the article calculated in Step S107.

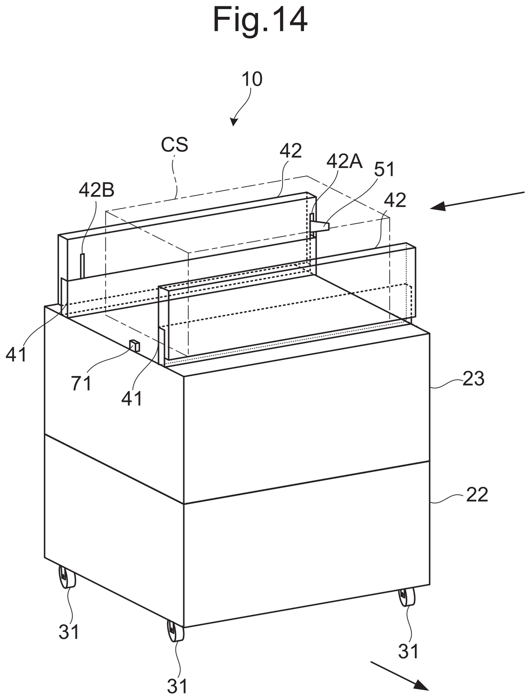

The controller 74 controls driving of each arm drive motor 45 to rotate each arm drive motor 45 at the rotation speed which has been set in Step S108, causes each arm 42 to retreat from the space above the first conveyor 11A as shown in FIG. 14 and to retract into a region inside the working section 23 of the automatic guided vehicle 10 from the position where it has protruded as described above. At the time of retraction of each arm 42, each first claw 51 is hooked onto the end of the case CS, and each arm 42 causes the case CS to retract from the first conveyor 11A into the working section 23 of the automatic guided vehicle 10 (Step S110).

That is, due to the retraction of each arm 42, the case CS moves from the position on the first conveyor 11A to a place on the working section 23 of the automatic guided vehicle 10. In this manner, the movement speed of each arm 42 slows down as the weight of the article increases, and the case CS is transferred from the first conveyor 11A to the working section 23 of the automatic guided vehicle 10 at a low speed. For this reason, when each arm 42 causes the case CS to retract into the working section 2 of the automatic guided vehicle 10, a burden on each arm drive motor 45 can be reduced.

In addition, movement of the case CS from the position on the first conveyor 11A to a place on the working section 23 of the automatic guided vehicle 10 is performed in a state in which transportation by the first conveyor 11A and traveling of the automatic guided vehicle 10 continue. However, since the movement is performed at a low speed, the case CS can be moved stably and reliably from the position on the first conveyor 11A to a place on the working section 23 of the automatic guided vehicle 10.

In addition, since one end of the shaft 16A of each roller 16 is higher on the guide frame 17 side and the other end of the shaft 16A is lower on the support frame 18 side, each roller 16 is inclined. Moreover, since the support frame 18 is lower than the circumferential surface of each roller 16, the case CS can be easily drawn out to the automatic guided vehicle 10 on the outward side of the support frame 18 from each roller 16 by each arm 42.

After the case CS is caused to retract from the first conveyor 11A to the working section 23 of the automatic guided vehicle 10, the controller 74 controls driving of each claw drive motor 55 to cause each first claw 51 to retreat and be stored inside the arm 42.

The controller 74 detects the position of the traveling line 15 on the basis of a detection output of the traveling line sensor 72 and controls driving of the traveling drive motor 33 of each driving wheel 32 in accordance with the detected position of the traveling line 15 to cause the automatic guided vehicle 10 to travel along a route in the order of the first traveling line 15A, the second traveling line 15B, and the third traveling line 15C (Step S111).

When the automatic guided vehicle 10 travels to the position of the storage shelf 12, the controller 74 causes the image capturing camera 71 to capture an image of a 2D code attached to each of different positions in the traveling direction of the automatic guided vehicle 10 in the storage shelf 12. The controller 74 analyzes the captured image of the 2D code and detects location information of the storage shelf 12 included in the 2D code. The controller 74 receives the location information of the storage shelf 12 associated with the unique ID of the case CS in advance via the communication device 73.

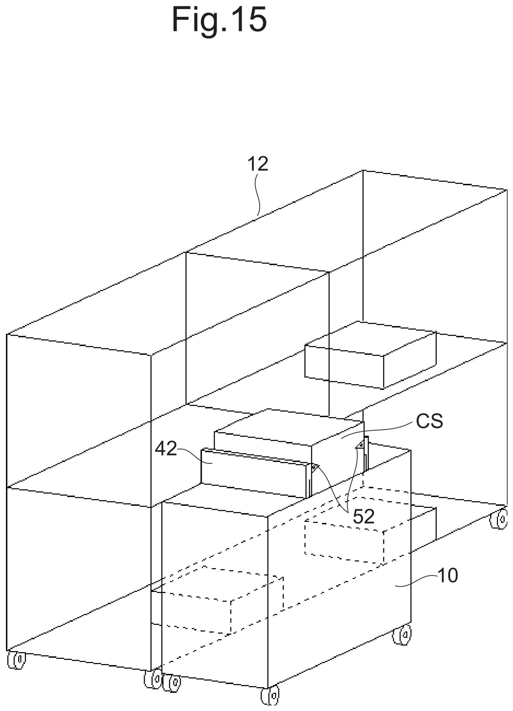

When an image of a 2D code including location information matching the location information of the storage shelf 12 associated with the foregoing ID is captured, the controller 74 stops the automatic guided vehicle 10 at a position at this point of time, as shown in FIG. 15 (Step S112). At this time, the automatic guided vehicle 10 is in a posture in which the distal end of the arm 42 provided with each first claw 51 faces the storage shelf 12 side due to direction turning during each route change of the first traveling line 15A, the second traveling line 15B, and the third traveling line 15C.

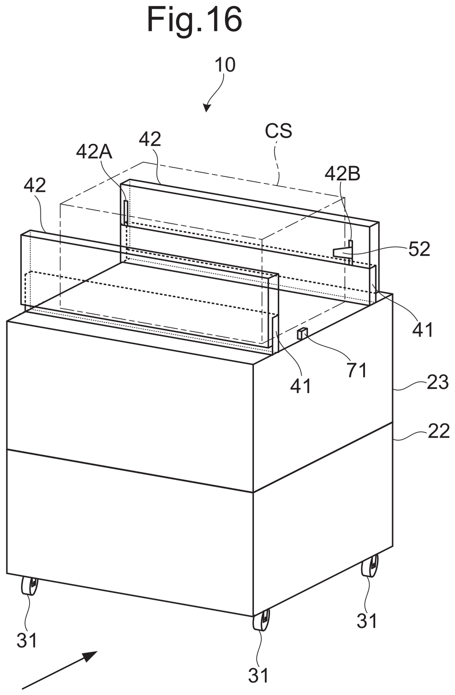

The controller 74 controls driving of each claw drive motor 56 to cause the second claw 52 of each arm 42 on the rear end inward side to protrude, as shown in FIGS. 15 and 16, (Step S113). At this time, the second claw 52 of each arm 42 on the rear end inward side is positioned on the end side of the case CS which is a side opposite to the storage shelf 12.

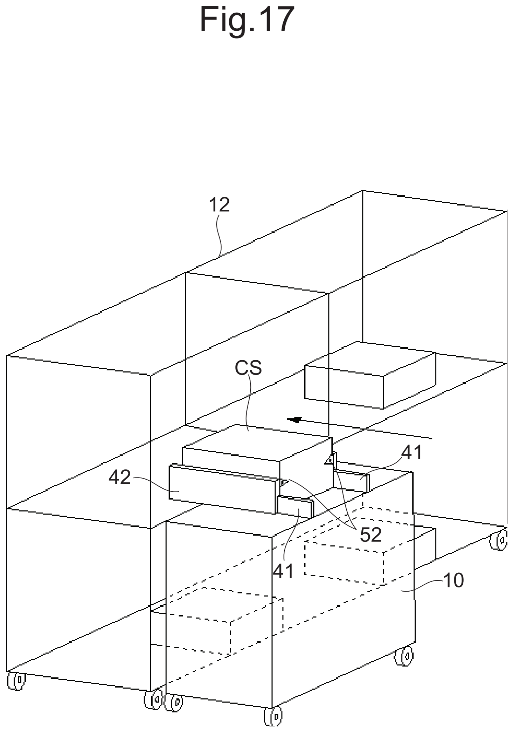

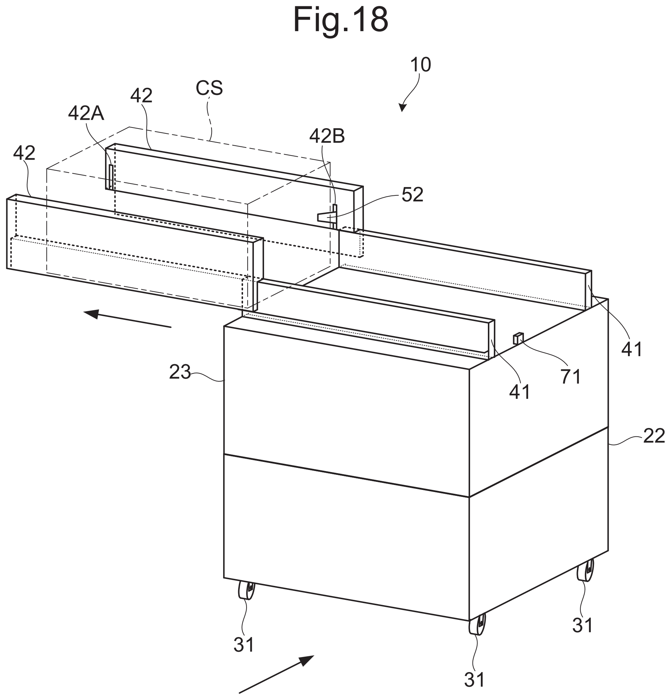

The controller 74 controls driving of each arm drive motor 45 to cause each arm 42 to protrude to the side of the storage shelf 12, as shown in FIGS. 17 and 18 (Step S114). The amount of protrusion at this time is set to an amount allowing the second claw 52 of each arm 42 on the rear end inward side to enter at least a position above the storage shelf 12. The slide rails 43 employs a constitution in which the second rail is interlocked and supported by the first rail and the movement direction thereof is guided by the first rail so that it also moves in the outward direction toward the storage shelf 12 side (direction opposite to the outside facing the first conveyor 11A side as shown in FIG. 5).

Due to the protrusion of each arm 42 to the side of the storage shelf 12, the controller 74 causes each second claw 52 to be hooked onto the case CS and causes each arm 42 and the second claw 52 to push the case CS into the storage shelf 12 from above the working section 23 of the automatic guided vehicle 10 to move the case CS to the storage shelf 12 from above the working section 23 of the automatic guided vehicle 10. The controller 74 controls driving of each claw drive motor 56 to cause each second claw 52 to retreat and be stored inside the arm 42.

The controller 74 detects the position of the traveling line 15 on the basis of a detection output of the traveling line sensor 72 and controls driving of the traveling drive motor 33 of each driving wheel 32 in accordance with the detected position of the traveling line 15 to cause the automatic guided vehicle 10 to travel along a route in the order of the third traveling line 15C, the fourth traveling line 15D, and the first traveling line 15A. After a certain time from when the proceeding direction is turned by 90 degrees between the fourth traveling line 15D and the first traveling line 15A, the controller 74 stops the traveling drive motor 33 of each driving wheel 32 and stops the automatic guided vehicle 10 at the standby position HP (Step S115).

In this manner, in the present embodiment, if the first conveyor 11A starts transporting the case CS, the automatic guided vehicle 10 travels along the first traveling line 15A in parallel with, and the foregoing one arm 42 on the upstream side in the transportation direction protrudes. At this time, the traveling speed V of the automatic guided vehicle 10 is set to the traveling speed VA higher than the transportation speed VS of the case CS. If the one arm 42 moves to the position of the case CS, the other arm 42 on the downstream side in the transportation direction protrudes, and the case CS between the arms 42 is sandwiched.

In this state, the first claw 51 of each arm 42 on the distal end inward side protrudes and each arm 42 is withdrawn into the automatic guided vehicle 10. At this time, each first claw 51 is hooked onto the case CS, and the case CS is pushed to the working section 23 of the automatic guided vehicle 10 from the first conveyor 11A by the arm 42 and the first claw 51 and moved to a place on the working section 23 of the automatic guided vehicle 10.

According to the present embodiment, it is possible to transfer the case CS being transported by the first conveyor 11A to the automatic guided vehicle 10 while causing the automatic guided vehicle 10 to travel, and to efficiently move the case CS.

In addition, since the case CS comes into sliding contact with the guide frame 17 while being transported by the first conveyor 11A, the position of the case CS in the width direction of the first conveyor 11A is constantly maintained so that the transportation trajectory of the case CS is made stable. As a result, the separation distance between the image capturing camera 71 and the 2D code Q on the side surface of the case CS does not fluctuate so that an image of the 2D code Q is accurately captured by the image capturing camera 71.

In addition, since each roller 16 is inclined and the support frame 18 is lower than the circumferential surface of each roller 16, the case CS can be easily drawn out to the automatic guided vehicle 10 on the outward side of the support frame 18 from each roller 16 by each arm 42.

### <First modification example>

In a first modification example, the working section 23 of the automatic guided vehicle 10 is raised and lowered in a vertical direction. For example, a plurality of struts are installed in a projecting manner in the traveling section 22 of the automatic guided vehicle 10, and the working section 23 is supported by each strut in a manner of being movable in the vertical direction so that the working section 23 is raised and lowered using a plurality of ball screws which are known mechanisms. The ball screws each include a screw shaft installed in a projecting manner in the traveling section 22 and rotatably supported, and a nut fixed to the working section 23 and screwed into the screw shaft.

The traveling section 22 includes a corresponding raising/lowering motor for rotating each screw shaft. The controller 74 raises each nut and the working section 23 by rotating each screw shaft in one direction using each raising/lowering motor. The controller 74 also lowers each nut and the working section 23 by rotating each screw shaft in the opposite direction using each raising/lowering motor. According to the first modification example, even if the heights of the conveyor device 11 and the storage shelf 12 change, the working section 23 can be raised and lowered in accordance with the heights of the conveyor device 11 and the storage shelf 12, and the case CS can be transferred between the working section 23 and the conveyor device 11 or the storage shelf 12.

### <Second modification example>

In a second modification example, the separation distance between the arms 42 is changed. For example, the working section 23 is provided with a rack gear supporting the one support wall 41 in a manner of being slidable in a direction orthogonal to the longitudinal direction of each arm 42 and extending in the foregoing orthogonal direction at the lower end of the one support wall 41. Moreover, a pinion gear meshing with the rack gear, and a motor for reciprocally rotating the pinion gear are provided in the working section 23.

Under the control of the controller 74, the motor causes the rack gear to reciprocate by reciprocally rotating the pinion gear. Accordingly, the separation distance between the arms 42 is changed by moving the one support wall 41 and the one arm 42 toward or away from the other support wall 41 and the other arm 42. According to the second modification example, even if the width of the case CS changes, the case CS can be sandwiched between the arms 42, and the case CS can be transferred between the working section 23 and the conveyor device 11 or the storage shelf 12.

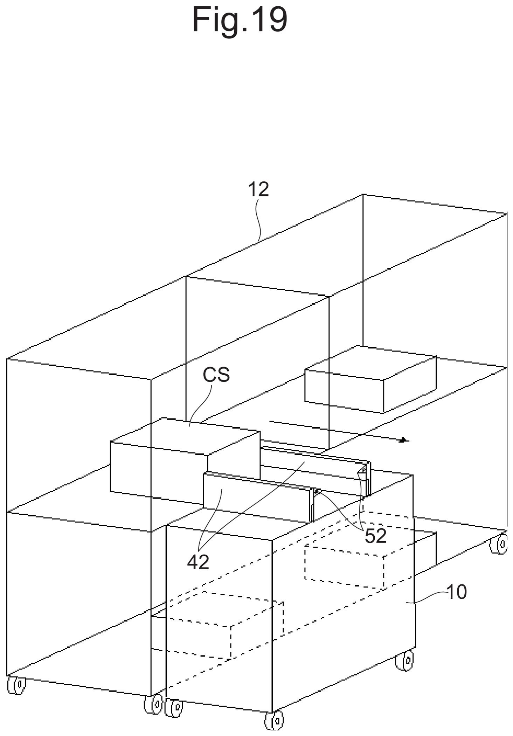

The constitution and the processing of the foregoing embodiment and modification examples which have been described using FIGS. 1 to 19 are merely examples of the present invention, and it is not intended that the present invention is not limited to the constitution and the processing. For example, in the foregoing embodiment, the case CS being transported by the conveyor device 11 is taken into the automatic guided vehicle 10 and stored in the storage shelf 12. However, the present invention is not limited to such an embodiment.

For example, the controller 74 may control driving of the traveling drive motors 33, the arm drive motors 45, the claw drive motors 55, and the claw drive motors 56 to operate the arms 42, the first claws 51, the second claws 52, and the image capturing camera 71 performing an operation in which the automatic guided vehicle 10 takes in the case CS stored in the storage shelf 12 onto the automatic guided vehicle 10, the case CS is transported to the position of the conveyor device 11, and the case CS is transferred from a place on the automatic guided vehicle 10 to a place on the conveyor device 11.

## Claims

1. A conveyor device comprising:
a conveyor having a plurality of rollers installed side by side in a transportation direction of an article, and transporting the article on each of the rollers by rotating each of the rollers;
a guide frame extending in a horizontal direction along one end of each of the rollers, formed at a height higher than a circumferential surface of each of the rollers, and pivotally supporting one end of each of the rollers; and
a support frame extending in the horizontal direction along the other end of each of the rollers, formed at a height lower than the circumferential surface of each of the rollers, and pivotally supporting the other end of each of the rollers,
wherein in a top view in a vertical direction, an angle formed by an axis of each of the rollers with respect to the guide frame, that is, an angle on a downstream side in the transportation direction of the article is an acute angle set as a predetermined angle, and each of the rollers is disposed obliquely with respect to the guide frame.

2. The conveyor device according to claim 1,
wherein in a side view in the transportation direction of the article in the conveyor, each of the rollers has an inclination such that one end of the axis of each of the rollers is higher on the guide frame side and the other end of the axis of each of the rollers is lower on the support frame side than on the guide frame side.

3. The conveyor device according to claim 1,
wherein in a side view in the transportation direction of the article in the conveyor, an upper end of the guide frame is formed higher than the circumferential surface of each of the rollers.

4. The conveyor device according to claim 2,
wherein each of the rollers is inclined with respect to the horizontal direction by 1 degree to 10 degrees.

5. An automatic guided vehicle system comprising:
the conveyor device according to claim 1; and
an automatic guided vehicle traveling along a side end which is the support frame side of the conveyor,
wherein the automatic guided vehicle includes an image capturing device capturing an image of a mark printed on a surface of the article facing the automatic guided vehicle when the article is being transported by the conveyor.

6. The automatic guided vehicle system according to claim 4,
wherein the automatic guided vehicle includes
driving wheels,
a traveling drive device causing the automatic guided vehicle to travel by rotating the driving wheels,
a pair of arms constituted to be provided at corresponding positions on the automatic guided vehicle on the downstream side and an upstream side in the transportation direction of the article in the conveyor when the automatic guided vehicle travels along the conveyor, extend in a direction orthogonal to the transportation direction of the article, face each other at positions at a distance corresponding to a width of the article in the transportation direction of the article, and reciprocate in the orthogonal direction so as to be capable of performing an operation of protruding outward from the automatic guided vehicle and an operation of retracting into the automatic guided vehicle from a protruding position,
arm drive devices causing the pair of corresponding arms to perform the reciprocation,
a pair of first claws constituted to be provided at distal ends of the pair of corresponding arms so as to be capable of performing an operation of protruding to a space between the pair of arms from the distal ends and an operation of retreating into the distal ends,
first claw drive devices causing the pair of corresponding first claws to perform any of the protruding operation and the retreat operation, and
a controller controlling the traveling drive device, the arm drive devices, and the first claw drive devices
to cause the automatic guided vehicle to travel at a predetermined first traveling speed higher than a transportation speed of the article and cause one arm of the pair of arms provided on the upstream side to protrude above the conveyor from the automatic guided vehicle,
to cause the other arm provided on the downstream side to protrude above the conveyor from the automatic guided vehicle when the one arm has moved to a position of the article being transported by the conveyor, and
to cause the pair of first claws to protrude to a space between the pair of arms from the distal ends of the pair of arms and cause the pair of arms to retract into the automatic guided vehicle from above the conveyor in a state in which the article is present between the pair of arms.

7. The automatic guided vehicle system according to claim 5,
wherein the mark is a 2D code including weight information indicating a weight of the article, and
the controller controls the traveling drive device when the weight of the article indicated by the weight information is equal to or greater than a predetermined threshold to reduce a traveling speed of the automatic guided vehicle to a speed equal to or greater than the transportation speed of the article, that is, a predetermined second traveling speed lower than the first traveling speed.

8. The automatic guided vehicle system according to claim 5,
wherein the mark is a 2D code including weight information indicating a weight of the article, and
the controller controls the arm drive device, as the weight of the article indicated by the weight information increases, to reduce a movement speed of the pair of arms when the pair of arms are caused to retract into the automatic guided vehicle from a space above the conveyor.

9. The automatic guided vehicle system according to claim 5 further comprising:
a pair of second claws constituted to be provided at rear ends of the pair of corresponding arms so as to be capable of performing an operation of protruding to a space between the pair of arms from the rear ends and an operation of retreating into the rear ends; and
second claw drive devices causing the pair of corresponding second claws to perform any of the protruding operation and the retreat operation,
wherein the controller controls the arm drive devices and the second claw drive devices to cause the pair of second claws to protrude to a space between the pair of arms from the rear ends of the pair of arms and cause the pair of arms to protrude outward from the inside of the automatic guided vehicle.
